# EUROPÄISCHE PATENTSCHRIFT

(11) **EP 0 744 420 B1**
(45) Veröffentlichungstag und Bekanntmachung des Hinweises auf die Patenterteilung: **28.05.2003**
(21) Anmeldenummer: 96104556.4
(22) Anmeldetag: 22.03.1996
(51) Int. Cl.: C08G 18/63, C08G 18/10, C08F 283/00, C09J 175/04

(54) **Lösungsmittelfrei verwendbarer Klebstoff**
Solventless utilizable adhesive
Matière adhésive utilisable sans solvant

(30) Priorität: 20.05.1995 DE 19518656
(43) Veröffentlichungstag der Anmeldung: 27.11.1996
(73) Patentinhaber: MORTON INTERNATIONAL GmbH, D-28239 Bremen (DE)
(72) Erfinder: Krawczyk, Gerhard, Dr., 28259 Bremen (DE); Dreja, Volker, 27711 Osterholz-Scharmberg (DE)
(74) Vertreter: Weber, Dieter, Dr. Dipl.-Chem.

(56) Entgegenhaltungen:
- EP-A- 0 246 473
- EP-A- 0 275 908
- EP-A- 0 279 725
- US-A- 4 731 416

## Beschreibung

Polyisocyanate mit Urethangruppen, die aus niedermolekularen Polyalkoholen und Diisocyanaten gewonnen werden, sind seit langem bekannt. Beispielsweise sind solche Polyisocyanate in den deutschen Patentschriften 870 400, 953 012 und 1 090 196 beschrieben. Bei der Herstellung solcher Polymere durch Umsetzung von Polyalkoholen mit Diisocyanaten bekommt man durch Verwendung eines Überschusses des Diisocyanats Polyisocyanatpolymere mit freien Isocyanatgruppen oder durch Überschuß des Polyalkohols Polyurethane mit freien OH-Gruppen. Solche Produkte sind als Lack- und Kleberrohstoffe von Bedeutung. Sie sind jedoch nachteilig, da sie geringe Lichtechtheit und hohe Rohstoffkosten haben.

Bekannt ist auch die Polymerisation von Styrol und Acrylnitril in Gegenwart von Detergentien in Polyethem zu sogenannten gefüllten Polyethem bzw. Polymerpolyolen als Grundmaterialien für die Herstellung von Polymerdispersionen In Polyurethanen und Schaumstoffen. Diesbezüglich wird auf die britische Patentschrift 1 455 495, die belgische Patentschrift 635 489 und die spanischen Patentschriften 555 780 und 555 890 hingewiesen. Die Verwendung von Epoxydispersionen in Polyolen ist in der deutschen Offenlegungsschrift 2 943 689 offenbart. Transparente Klebersysteme sind dort aber nicht beschrieben.

Das Dokument D1 (EP-A-0 246 473) ist dadurch gekennzeichnet, daß die Schmelzviskosität bei 120 °C 3000 bis 50 000 cps beträgt. Bei 100 °C gemessen ist die Viskosität naturgemäß noch erheblich höher, so daß ein großer Abstand der Untergrenze des in der D1 als wesentlich angesehenen Schmelzviskosität und der Obergrenze gemäß Anspruch 1 der vorliegenden Anmeldung vorliegt (1 cps entspricht im wesentlichen 1 mPa s). Solche Klebstoffe, wie sie in der Druckschrift D1 beschrieben sind, lösen die der vorliegenden Anmeldung zugrundeliegende Aufgabe nicht, da sie nicht oder nicht ausreichend transparent sind.

Das Dokument D2 (US-A-4 731 416) sagt weder etwas über die Schmelzviskositäten noch das Verhältnis von (a) zu (b) aus. Die speziellen Angaben in den Beispielen zeigen jedoch, daß die Werte für beide Eigenschaften weit über den in der vorliegenden Anmeldung beanspruchten Bereichen liegen. So ergibt sich aus Beispiel 1 des Dokumentes D2 ein Verhältnis von (a) zu (b) von 21 : 79, was erheblich außerhalb des beanspruchten Bereiches liegt.

Schließlich kennt man allgemein auch Polyurethanacrylate, die durch Addition hydroxylfunktioneller Acrylate an Polyurethane mit NCO-Endgruppen in Gegenwart monomerer Acrylate gewonnen werden und als sogenannte reaktive Verdünnungsmittel in strahlungs- oder UV-härtenden Systemen eingesetzt werden. Lösungsmittelfrei verwendbare Kleber sind in allen diesen Polymergruppen nicht beschrieben. Vielmehr sind die Viskositäten von Polyacrylaten zu hoch, um die Kombination mit Polyurethanpolymeren lösungsmittelfrei realisieren zu können. In vielen anwendungstechnischen Betrieben aber ist die Benutzung lüsungsmittelhaltiger Kleber unerwünscht, da bei der Trocknung der Kleber die Lösungsmittel freigesetzt werden, was zu gesundheitlichen Schädigungen oder alternativ hohen Investitionen führen kann. Außerdem ist es in vielen Industrien erwünscht, transparente Kleber zu bekommen, insbesondere dann, wenn transparente Materialien miteinander laminiert werden sollen.

Die der Erfindung zugrundeliegende Aufgabe bestand somit darin, neue transparente Klebstoffe lösungsmittelfrei herzustellen.

Erfindungsgemäß wird diese Aufgabe durch Klebstoffe gelöst, bestehend aus wenigstens einem durch gegebenenfalls hydroxylfunktionelles (Meth)acryl- oder Vinythomo- oder -copolymer (a) modifizierten Polyurethan mit OH- oder NCO-Endgruppen (b), wobei das Polyurethan (b) ein Reaktionsprodukt eines Polyetherpolyols (c₁) und/oder Polyesterpolyols (c₂) mit einem monomeren Isocyanat mit 1 oder 2 NCO-Gruppen (d₁) und/oder einem Polyisocyanat (d₂) ist, wobei das Gewichtsverhältnis von (a) zu (b) 30:70 bis 60:40 beträgt und die Schmelzviskosität des klebstoffes bei 100° C kleines als 2500 mPas ist.

Wenn hier davon die Rede ist, daß die erfindungsgemäßen Klebstoffe lösungsmittelfrei verwendbar sind, so besagt dies nicht, daß sie zwingend lösungsmittelfrei verwendet werden müssen. Die erfindungsgemäßen Klebstoffe können sowohl ein- als auch zweikomponentig verarbeitet werden.

Überraschenderweise haben die erfindungsgemäßen Klebstoffe eine ausreichend niedrige Viskosität, um ohne Verdünnung, d. h. ohne Lösungsmittelzusatz, eingesetzt werden zu können, und sie sind überraschenderweise transparent, so daß sie zum Verkleben transparenter Materialien, wie durchsichtiger Kunststoffplatten, eingesetzt werden können. Die erfindungsgemäßen Klebstoffe können auf den verschiedensten technischen Gebieten eingesetzt werden. Zweckmäßig benutzt man sie zum Laminieren von Papier mit Kunststoffolien, zum Auflaminieren eines Kunststoffilmes auf Holz- oder Spanholzgegenständen, zum Verbinden von Papier oder Karton mit Aluminiumfolien, zum Laminieren von Kunstoffolien unterschiedlicher Beschaffenheit miteinander und zum Kaschieren von Aluminiumfolien mit Kunststoffolien.

Die als Ausgangskomponente verwendeten Polyurethane (b) sind also Reaktionsprodukte eines Polyetherpolyols (c₁) und/oder Polyesterpolyols (c₂) mit einem monomeren Isocyanat mit 1 oder 2 NCO-Gruppen (d₁) und/oder einem Polyisocyanat (d₂). Diese Polyurethane (b) werden erfindungsgemäß mit wenigstens einer der Komponenten (a) modifiziert. Diese Modifizierung kann nicht durch einfaches Vermischen der Komponenten (a) und (b) lösungsmittelfrei erfolgen. Die Komponente (a) kann aber erfindungsgemäß monomer in die Komponente (b) gegeben und einpolymensiert werden und dabei Gemische aus Polyacrylat und Polyurethan ergeben. Die (Meth)acryl- oder Vinylhomo- oder -copolymeren können auch freie Hydroxylgruppen besitzen. Solche hydroxylfünktionellen Polymere (a) werden dann durch Polyaddition an monomere Isocyanate (d₁) oder NCO-endständige Polyurethanvorpolymere oder Gemische hiervon kovalent gebunden.

Die Komponente (a), mit welcher das Polyurethan (b) modifiziert wird, ist ein Homopofymeres oder Copolymeres von Acrylsäure, Methacrylsäure oder deren Derivaten und/oder Vinylverbindungen. Zweckmäßig leiten sich diese Polymeren von (Meth)acrylsäure oder deren Estern der allgemeinen Formel 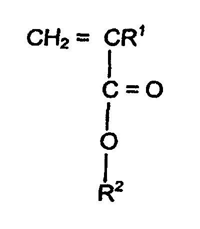 her, worin R¹ H oder CH₃ und R² H oder eine C₁₋₈-Alkylgruppe bedeutet. Die Vinylpolymeren (a) leiten sich vorzugsweise von Vinylacetat oder dessen Derivaten der allgemeinen Formel 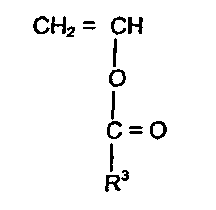 her, worin R³ zweckmäßig CH₃ oder C₂H₅ ist. Als Comonomere der Copolymeren (a) kommen beispielsweise hydroxylgruppenhaltige Verbindungen der altgemeinen Formel in Betracht: 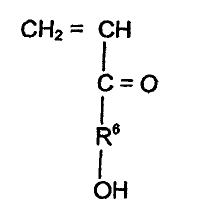 worin R⁶ -C₂H₄- oder C₃H₆- bedeutet. Auch können pimäre oder sekundäre Aminogruppen enthaltende vinylische Monomere verwendet werden.

Die Reaktionskomponente des Polyurethans (b) kann wenigstens ein Polyetherpolyol (c₁) oder wenigstens ein Polyesterpolyol (c₂) oder ein Gemisch wenigstens eines Polyetherpolyols mit wenigstens einem Polyesterpolyol sein.

Das als Komponente (c₁) verwendete Polyetherpolyol besitzt zweckmäßg eine der Formeln

HO-CH₂-CH₂-(O-CH₂-CH₂)ₙ-OH oder HO-CH₂-CH₂-CH₂-O-(CH₂-CH₂-CH₂-O)ₘ-H

worin m und n jeweils eine ganze Zahl von 4 bis 30 bedeutet. Selbstverständlich können Gemische dieser Polyetherpolyole untereinander oder mit wenigtens einem Dialkohol der beiden obigen Formeln, worin n bzw. m 0 bedeutet, verwendet werden. Die Komponente (c₁) kann auch nur aus einem Dialkohol einer der beiden obigen Formeln, worin n bzw. m 0 ist, oder einem Gemisch solcher Dialkohole bestehen. Günstigerweise wird bei der Herstellung der erfindungsgemäßen. Kleber ein Polyetherpolyol mit einem Molekulargewicht von 62 bis 6000, vorzugsweise von 400 bis 3000, benutzt, wobei dieses Molekulargewicht aus dem Hydroxytgruppengehalt und der Hydroxylgruppenfunktionalität errechenbar ist.

Wenn als Reaktionskomponente ein Polyesterpolyol oder ein Gemisch von Polyesterpolyolen eingesetzt wird, so besitzen diese Polyesterpolyole zweckmäßig die allgemeine Formel

H(O-R⁴-O-CO-R⁵-CO)ₓ-OH,

worin R⁴ und R⁵ aliphatische und/oder aromatische und/oder cycloaliphatische zweibindige Reste bedeuten und x eine ganze Zahl ist, die ein Molekulargewicht des Polyesterpolyols von wenigstens 400 ergibt. Zweckmäßig liegen die Molekulargewichte der Polyesterpolyole bei 400 bis 6000, vorzugsweise bei 1000 bis 3000, wobei die Molekulargewichte wiederum aus dem Hydroxylgruppengehalt und der Hydroxylgruppenfunktionalität errechenbar sind. Zweckmäßige Beispiele der zweibindigen Reste R⁴ und R⁵ in dieser Formel sind: 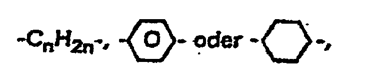 worin n 4 bis 20 bedeutet.

Die Reaktionskomponente kann ein monomeres Isocyanat mit 1 oder 2 NCO-Gruppen (d₁) sein und besitzt dabei zweckmäßig die allgemeine Formel

R(NCO)_{y},

worin R eine C₄₋₁₂-aliphatische, C₆₋₁₅-aromatische oder C₆₋₁₅cycloaliphatische Kohlenwasserstoffgruppe bedeutet und y 1 oder 2 ist. Bevorzugt ist das monomere Isocyanat ein Diisocyanat, zweckmäßig der Formel

OCN-R-CH₂-R-NCO,

worin R wie oben definiert ist. Beispiele solcher Diisocyanate sind 4,4'- oder 2,4-Diphenylmethandiisocyanat (MDI), 2,4- bzw. 2,6-Toluylendiisocyanat (TDI) oder Isophorondiisocyanat (IPDI).

Wenn das Polyurethan (b) NCO-Endgruppen haben soll, werden die Ausgangskomponenten (c₁, c₂) und (d₁, d₂) günstigerweise so ausgewählt und in solchen Mengenverhältnissen miteinander umgesetzt, daß der NCO-Gehalt des Polyurethans (b) 0,5 bis15, vorzugsweise 2 bis 8 Gew.-% beträgt. Wenn das Polyurethan (b) dagegen OH-Endgruppen haben soll, ist seine OH-Zahl zweckmäßig 1 bis 110, vorzugsweise 10 bis 50.

Der fertige modifizierte Polyurethanklebstoff nach der Erfindung besitzt eine Schmelzviskosität bei 100°C kleiner als 2500 mPa • s. Der Acrylatgehalt bzw. Vnylgehalt kann 50 Gew.-% übersteigen. Das Gewichtsverhältnis von (a) zu (b) liegt im Bereich von 30 : 70 bis 60 : 40.

Die Modifizierung des Polyurethans (b) mit der Komponente (a) kann auf unterschiedliche Weise erfolgen. Beispielsweise können die Acrylat-, Methacrylat- oder Vinylmonomeren (a) in Polyetherpolyol (c₁) und/oder Polyesterpolyol (c₂) polymerisiert werden, wobei entweder monomere Isocyanate, insbesondere Diisocyanate, zur Bildung von Polyurethanen in Gegenwart von Polyacrylaten, Po/ymethacrylaten oder Vinylpolymeren zugesetzt oder Polyurethanvorpolymere mit NCO-Endgruppen zugegeben werden. Stattdessen kann man auch von Potyurethanvorpolymeren mit OH- oder NCO-Endgruppen ausgehen und zu diesen die monomeren Acrylate, Methacrylate oder Vinylverbindungen zusetzen, wonach anschließend letztere polymerisiert werden. Schließlich ist auch gleichzeitige Polymerisation von monomeren Acrylaten, Methacrylaten oder Vinylverbindungen und Polyaddition von Polyether- und/oder Polyesterpolyolen mit monomeren Isocyanaten zu Polyurethanen mit OH- oder NCO-Endgruppen möglich.

Ein exemplarisches Beispiel für die Herstellung der enfindungsgemäben Klebstoffe ist folgendes: In einer ersten Reaktionsstufe wird Vinylacetat und/oder Acrylatmonomer radikalisch in Polyetherund/oder Polyesterpolyolen vollständig zu den entsprechenden Polymeren bei 80 bis 130°C polymerisiert. Der Polymerisatanteil in der Polyolkomponente kann mehr als 65 Gew.-% betragen. Die Viskosität bei 25°C ist gewöhnlich kleiner als 10 000 mPa • s, vorzugsweise geringer als 5000 mPa • s. Entsprechend den obigen Ausführungen wird durch Zusatz von niedrigviskosen Polyurethanvorpolymeren mit NCO-Endgruppen emeut erfindungsgemäß eine Polyaddition unter Polyurethanbildung durchgeführt. Somit liegt als lösungsmittelfreies Produkt eine Kombination von Polyacrylat und Polyurethan vor.

Die Schmelzviskosität der erfindungsgemäßen Klebstoffe ist überraschenderweise niedrig genug, um diese Klebstoffe lösungsmittelfrei bei Raumtemperatur oder erhöhter Temperatur verarbeiten zu können, obwohl sie außerhalb des Rahmens der Erfindung selbstverständlich auch als lösungsmittelhaltige Systeme verarbeitet werden können, wenn dies erwünscht ist. Die erfindungsgemäßen Klebstoffe sind lösungsmittelfrei, d. h. werden in ihrer hundertprozentigen Form bei Verarbeitungstemperaturen von 20 bis 100°C, eingesetzt. In lösungsmittelhaltigem Zustand liegt der Feststoffgehait zweckmäßig im Bereich von 20 bis 85 Gew.-% bei Raumtemperatur. Geeignete Lösungsmittel für die erfindungsgemäßen Klebstoffe sind beispielsweise Ethylacetat, Isopropylacetat, Butylacetat und andere üblicherweise für Lacke und Klebstoffe benutzte organische Lösungsmittel. Überraschenderweise sind die erfindungsgemäßen Klebstoffe deutlich besser verdünnbar als analoge acrylatfreie Polyurethane, so daß Lösungen mit einer Viskosität von beispielsweise 20 sec (nach DIN *53* 211, 20°C) einen Feststoffgehalt von bis zu 70 Gew.-% haben können, was diese Klebstoffe vorteilhaft verarbeitbar und mit üblichen Maschinengeschwindigkeiten und/oder hohen Anwendungsgewichten leicht trockenbar macht. Die Klebstoffe sind transparent und können so zum Laminieren transparenter Folien oder in der Papierveredelung eingesetzt werden. Sie ergeben hohe Anfangsverbundwerte und besitzen höhere Lichtbeständigkeiten bei niedrigen Rohstoffkosten im Vergleich mit unmodifizierten entsprechenden Polyurethanen.

Durch die folgenden Beispiele wird die Erfindung weiter erläutert Die nachfolgenden Prozentangaben beziehen sich auf Gewichtsprozente.

### Beispiel 1

### Herstellung eines acrylatmodifizierten Polyisocyanate auf Polyether- und Polyesterbasis

260 g eines Polyetherpolyols mit einem mittleren Molekulargewicht von 400 wurden auf 100°C erhitzt. Ein Gemisch von 190 g Vinylacetat, 104 g Butylacrylat und 3 g 2,2'-Azoiso-bis-(butyronitril) (AIBN) wurden innerhalb von 2 h zugegeben. Bei einer Temperatur von 110°C wurde während 1 h polymerisiert. Anschließend wurden 0,5 g AIBN zugesetzt, worauf bei 120°C eine weitere Stunde gerührt wurde.

Nach 1 h wurden weitere 0,5 g AIBN zugesetzt, worauf wiederum bei 120°C während 1 h polymerisiert wurde. Nach Beendigung dieser Stufen wurde auf 70°C abgekühlt, und 432 g eines Polyurethanvorpolymers aus 110 g eines Polyesterpolyols mit mittlerem Molekulargewicht von 2800 sowie 322 g 4,4'-Diphenylmethandiisocyanat (MD() wurden zugesetzt. Unter einer Inertgasatmosphäre wurde bei 90°C 2 h gerührt. Es wurde ein klarer transparenter Kleber mit NCO-Endgruppen und den folgenden Parametern erhalten:

| | |
|---|---|
| Feststoffgehalt | 100 % |
| Viskosität (100 °C) | etwa 2500 mPa • s |
| NCO-Gehalt | 5 % |
| Copolymeranteil | 30 % |

### Vergleichsbeispiel 1

### Herstellung eines acrylatfreien Potyisocyanats auf Polyester- und Polyetherbasis

Das Verfahren des Beispiels 1 wurde mit der Ausnahme wiederholt, daß keine monomeren Acrylate zugegeben wurden. Durch Verwendung von 324 g MDI wurde der NCO-Gehalt analog Beispiel 1 gewählt. Der erhaltene klare Klebstoff hatte folgende Parameter

| | |
|---|---|
| Feststoffgehalt | 100 % |
| Viskosität (100 °C) | etwa 8000 mPa • s |
| NCO-Gehalt | 5 % |
| Copolymeranteil | 0 % |

Die deutlich höhere Viskosität führte dazu, daß dieser Klebstoff nicht lösungsmittelfrei verwendbar war.

### Beispiel 2

### Herstellung eines acrylatmodifizierten Polyurethans mit OH-Endgruppen auf Polyetherbasis

400 g eines Polyetherpolyols mit mittlerem Molekulargewicht 400 wurden auf 110 °C erhitzt. Ein Gemisch von 450 g Butylacrylat, 100 g Methylmethacrylat und 5 g AIBN wurde innerhalb einer Zeitdauer von 2 h bei 110°C zugegegen. Es wurde 1 h bei 110°C gerührt. Sodann wurden 0,5 g AIBN zugesetzt, und es wurde eine weitere Stunde gerührt. Wiederum wurden 0,5 g AIBN zugesetzt, und die Polymerisation wurde während 2 h bei 120 °C fortgesetzt. Anschließend wurde auf 70 °C abgekühlt, und es wurden 15 g Triisopropanolamin (TIPA) und 122 g lsophorondiisocyanat (IPDI) unter Rühren zugesetzt. Die Temperatur wurde 2 h auf 90 °C gehalten. Der erhaltenen klare transparente Klebstoff hatte folgende Parameter

| | |
|---|---|
| Feststoffgehalt | 100 % |
| Viskosität (100 °C) | etwa 1800 mPa • s |
| OH-Gehalt | 1,8 % |
| Copolymerantell | 55 % |

### Vergleichsbeispiel 2

### Acrylatmodifiziertes Polyisocyanat auf Lösungsmittelbasis

420 g des Klebstoffes gemäß Beispiel 1 wurden mit 580 g Isopropylacetat (wasserfrei) verdünnt Der klare Klebstoff hatte folgende Parameter

| | |
|---|---|
| Feststoffgehalt | 42 % |
| Viskosität (20 °C) | etwa 18 sec (DIN 53 211) |
| Acrylat-Anteil | 12,6 % |
| NCO-Gehalt | 2,1 % |

## Patentansprüche

1. Transparenter, lösemittelfreier Klebstoff, bestehend aus wenigstens einem durch gegebenenfalls hydroxylfunktionelles (Meth)acryl- oder Vinylhomo- oder -copolymer (a) modifizierten Polyurethan mit OH- oder NCO-Endgruppen (b), wobei das Polyurethan (b) ein Reaktionsprodukt eines Polyetherpolyols (c₁) und/oder Polyesterpolyols (c₂) mit einem monomeren Isocyanat mit 1 oder 2 NCO-Gruppen (d₁) und/oder einem Polyisocyanat (d₂) ist, wobei das Gewichtsverhältnis von (a) zu (b) 30 : 70 bis 60 : 40 beträgt und wobei die Schmelzviskosität des Klebstoffes bei 100°C kleiner als 2500 mPa • s ist.

2. Klebstoff nach Anspruch 1, **dadurch gekennzeichnet, daß** ein hydroxylfunktionelles (Meth)acryl- oder Vinylhomo- oder -copolymeres (a) durch Polyaddition an monomeres Isocyanat (d₁) und/oder Polyurethanvorpolymer (d₂) gebunden ist.

3. Klebstoff nach Anspruch 1, **dadurch gekennzeichnet, daß** das (Meth)acryl- oder Vinylhomo- oder -copolymere (a) mit dem Polyurethan (b) vermischt vorliegt.

4. Klebstoff nach einem der Ansprüche 1 bis 3, **dadurch gekennzeichnet, daß** sich das (Meth)acrylhomo- oder -copolymere von (Meth)acrylsäure oder deren Ester der allgemeinen Formel 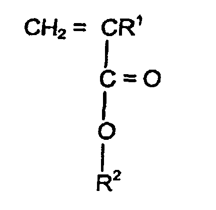 herleitet, worin R¹ H oder CH₃ und R² H oder eine C₁₋₈-Alkylgruppe bedeuten.

5. Klebstoff nach einem der Ansprüche 1 bis 4, **dadurch gekennzeichnet, daß** sich das Vinylhomo- oder -copolymere von Vinylacetat oder dessen Derivat der allgemeinen Formel 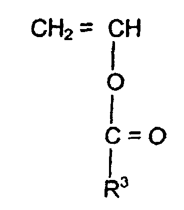 herleitet, worin R³ CH₃ oder C₂H₅ bedeutet.

6. Klebstoff nach einem der Ansprüche 1 bis 5, worin das Polyetherpolyol (C₁) die allgemeine Formel
HO-CH₂-CH₂-(O-CH₂-CH₂)ₙ-OH
oder die allgemeine Formel
HO-CH₂-CH₂-CH₂-O-(CH₂-CH₂CH₂-O)ₘ-H
besitzt, worin m und n jeweils eine ganze Zahl von 4 bis 30 bedeuten.

7. Klebstoff nach einem der Ansprüche 1 bis 6, worin das Polyetherpolyol (c₂) die allgemeine Formel
H(O-R⁴-O-CO-R⁵-CO)ₓ-OH
besitzt, worin R⁴ und R⁵ aliphatische und/oder aromatische und/oder cycloaliphatische zweibindige Reste bedeuten und x eine ganze Zahl bedeutet, die ein Molekulargewicht des Polyesterpolyols (c₂) von wenigstens 400 bis 6000 ergibt.

8. Klebstoff nach Anspruch 7, **dadurch gekennzeichnet, daß** das Polyesterpolyol (c₂) ein Molekulargewicht von 1000 bis 3000 besitzt.

9. Klebstoff nach einem der Ansprüche 1 bis 8, **dadurch gekennzeichnet, daß** das Polyetherpolyol (c₁) ein Molekulargewicht von 62 bis 6000 besitzt.

10. Klebstoff nach Anspruch 9, **dadurch gekennzeichnet, daß** das Polyetherpolyol (c₁) ein Molekulargewicht von 400 bis 3000 besitzt.

11. Klebstoff nach einem der Ansprüche 1 bis 10, **dadurch gekennzeichnet, daß** das monomere Isocyanat (d₁) die allgemeine Formel
OCN-R-CH₂-R-NCO
besitzt, worin R eine C₄₋₁₂-aliphatische, C₆₋₁₅-aromatische oder C₆₋₁₅-cycloaliphatische Kohlenwasserstoffgruppe bedeutet. lenwasserstoffgruppe bedeutet.

12. Klebstoff nach einem der Ansprüche 1 bis 11, **dadurch gekennzeichnet daß** in dem Polyurethan (b) der NCO-Gehalt 0,5 bis 15 Gew.% beträgt.

13. Klebstoff nach einem der Ansprüche 1 bis 11, **dadurch gekennzeichnet daß** in dem Polyurethan (b) die OH-Zahl 1 bis 110 beträgt.

14. Klebstoff nach einem der Ansprüche 1 bis 13, **dadurch gekennzeichnet, daß** das Polyurethan (b) einen NCO-Gehalt von 2 bis 15 Gew.% und eine Viskosität bei 25°C von 1000 bis 15 000 mPa • s besitzt.

## Claims

1. A transparent, solvent-free adhesive, consisting of at least one polyurethane with OH or NCO end groups (b) modified by a (meth)acryl- or vinyl- homo- or copolymer (a) which may contain hydroxyl functions, in which the polyurethane (b) is the product of the reaction between a polyether polyol (c₁) and/or a polyester polyol (c₂) with an isocyanate monomer containing 1 or 2 -NCO groups (d₁) and/or a polyisocyanate (d₂), wherein the weight ratio of (a) to (b) is 30 : 70 to 60 : 40, and wherein the melting viscosity of the adhesive at 100°C is less than 2500 mPa · s.

2. An adhesive according to claim 1, **characterized in that** a (meth)acryl- or vinyl- homo- or copolymer (a) containing hydroxyl functions is bonded to a monomeric isocyanate (d₁) and/or a polyurethane prepolymer (d₂) by polyaddition.

3. An adhesive according to claim 1, **characterized in that** the (meth) acryl- or vinyl homo- or copolymer (a) is mixed with polyurethane (b).

4. An adhesive according to one of claims 1 to 3, **characterized in that** the (meth) acrylate homo- or -copolymer is derived from a (meth)acrylic acid or the esters thereof with the following general formula: 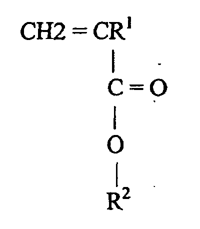 where R¹ is H or CH₃ and R² is H or a C₁₋₈ alkyl group.

5. An adhesive according to one of claims 1 to 4, **characterized in that** the vinyl homo- or -copolymer is derived from vinyl acetate or a derivative thereof with the following general formula: 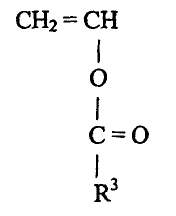 where R³ is CH₃ or C₂H₅.

6. An adhesive according to one of claims 1 to 5, in which the polyetherpolyol (c₁) has the general formula
HO-CH₂-CH₂-(O-CH₂-CH₂)ₙ-OH
or the general formula
HO-CH₂-CH₂-CH₂-O-(CH₂-CH₂-CH₂-O)ₘ-H
where m and n are each a whole number from 4 to 30.

7. An adhesive according to one of claims 1 to 6, in which the polyesterpolyol (c₂) has the general formula
H(O-R⁴-O-CO-R⁵-CO)ₓ-OH
where R⁴ and R⁵ are aliphatic and/or aromatic and/or cycloaliphatic double-bonded residues and x is a whole number, with a molecular weight for the polyesterpolyol (c₂) of at least 400 to 6000.

8. An adhesive according to claim 7, **characterized in that** the polyesterpolyol (c₂) has a molecular weight of 1000 to 3000.

9. An adhesive according to one of claims 1 to 8, **characterized in that** the polyetherpolyol (c₁) has a molecular weight of 62 to 6000.

10. An adhesive according to claim 9, **characterized in that** the polyetherpolyol (c₁) has a molecular weight of 400 to 3000.

11. An adhesive according to one of claims 1 to 10, **characterized in that** the isocyanate monomer (d₁) has general formula
OCN-R-CH₂-R-NCO
wherein R denotes a C₄₋₁₂-aliphatic, C₆₋₁₅-aromatic or C₆₋₁₅-cycloaliphatic hydrocarbon group.

12. An adhesive according to one of claims 1 to 11, **characterized in that** the NCO content of polyurethane (b) is 0.5% to 15% by weight

13. An adhesive according to one of claims 1 to 11, **characterized in that** the number of OH group in polyurethane (b) is 1 to 110.

14. An adhesive according to one of claims 1 to 13, **characterized in that** the polyurethane (b) has an NCO content of 2% to 15% by weight and a viscosity at 25 °C of 1000 to 15000 mPa • s.

## Revendications

1. Adhésif transparent sans solvant constitué d'au moins un polyuréthane ayant des groupes d'extrémité OH ou MCO (b), lequel est modifié par des homopolymères ou copolymères vinyliques ou acryliques ou méthacryliques le cas échéant hydroxyfonctionnels (a), le polyuréthane (b) étant un produit réactionnel d'un polyétherpolyol (c₁) et/ou d'un polyesterpolyol (c₂) avec un monomère isocyanate comportant 1 ou 2 groupes NCO (d₁) et/ou un polyisocyanate (d₂), le rapport en poids de (a) sur (b) étant compris entre 30:70 et 60:40 et la. viscosité à fusion de l'adhésif à 100°C étant inférieure à 2 500 mPa.s.

2. Adhésif selon la revendication 1, **caractérisé en ce qu'**un homopolymère où copolymère vinylique ou acrylique ou méthacrylique hydroxyfonctionnel (a) est lié par polyaddition à un monomère isocyanate (d₁) et/ou un prépolymère de polyuréthane (d₂).

3. Adhésif selon la revendication 1, **caractérisé en ce que** l'homopolymère ou copolymère vinylique ou acrylique ou métnacrylique (a) se trouve à l'état mélangé avec le polyuréthane (b).

4. Adhésif selon l'une des revendications 1 à 3, **caractérisé en ce que** l'homopolymère ou copolymère acrylique ou méthacrylique dérive de l'acide acrylique ou méthacrylique ou d'esters de celui-ci de formule générale 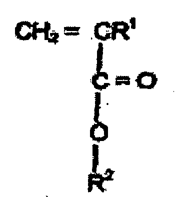 où R¹ est H ou CH₃ et R² est H ou des groupes alkyle en C₁₋₈.

5. Adhésif selon l'une des revendications 1 à 4, **caractérisé en ce que** l'homopolymère ou copolymère vinylique dérive de l'acétate vinylique ou de dérivés de celui-ci de formule générale 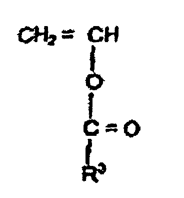 où R³ est CH₃ et C₂H₅.

6. Adhésif selon l'une des revendications 1 à 5, dans lequel le polyétherpolyol (c₁) a la formule générale
HO-CH₂-CH₂-(O-CH₂-CH₂)ₙ-OH
ou la formule générale
HO-CH₂-CH₂-CH₂-O- (CH₂-CH₂-CH₂-O)ₘ-H
où m et n sont des nombres entiers compris entre 4 et 30.

7. Adhésif selon l'une des revendications 1 à 6, dans lequel le polyesterpolyol (c₂) a la formule générale
H(O-R⁴-O-CO-R⁵-CO)ₓ-OH
où R⁴ et R⁵ sont des résidus aliphatiques et/ou aromatiques et/ou cycloaliphatiques à double liaison et x est un nombre entier qui confère au polyesterpolyol (c₂) une masse moléculaire comprise entre au moins 400 et 6 000.

8. Adhésif selon la revendication 7, **caractérisé en ce que** le polyesterpolyol (c₂) a une masse moléculaire comprise entre 1 000 et 3 000.

9. Adhésif selon l'une des revendications 1 à 8, **caractérisé en ce que** le polyétherpolyol (c₁) a une masse moléculaire comprise entre 62 et 6 000.

10. Adhésif selon la revendication 9, **caractérisé en ce que** le polyétherpolyol (c₁) a une masse moléculaire comprise entre 400 et 3000.

11. Adhésif selon l'une des revendications 1 à 10, **caractérisé en ce que** le monomère isocyanate (d₁) a la formule générale
OCN-R-CH₂-R-MCO
où R est un groupe hydrocarbure aliphatique en C₄-₁₂, aromatique en C₆₋₁₅ ou cycloaliphatique en C_{6-15.}

12. Adhésif selon l'une des revendications 1 à 11, **caractérisé en ce que** la teneur en NCO dans le polyuréthane (b) est comprise entre 0,5 et 15 % en poids.

13. Adhésif selon l'une des revendications 1 à 11, **caractérisé en ce que** le nombre de groupes OH dans le polyuréthane (b) est compris entre 1 et 110.

14. Adhésif selon l'une des revendications 1 à 13, **caractérisé en ce que** le polyuréthane (b) a une teneur en NCO comprise entre 2 et 15 % et une viscosité à 25 °C comprise entre 1000 et 15 000 mP.s.
